# EUROPEAN PATENT SPECIFICATION

(11) **EP 4 436 861 B1**
(45) Date of publication and mention of the grant of the patent: **30.09.2026**
(21) Application number: 22813745.1
(22) Date of filing: 18.11.2022
(51) Int. Cl.: B62D 25/14, B60K 1/04

(54) **A CROSS-MEMBER FOR SUPPORTING A DASHBOARD OF A MOTOR-VEHICLE**
QUERTRÄGER ZUR UNTERSTÜTZUNG EINES ARMATURENBRETTS EINES KRAFTFAHRZEUGS
ÉLÉMENT TRANSVERSAL DE SUPPORT D'UN TABLEAU DE BORD D'UN VÉHICULE À MOTEUR

(30) Priority: 22.11.2021 IT 202100029435
(43) Date of publication of application: 02.10.2024
(73) Proprietor: Stellantis Europe S.p.A., 10135 Torino (TO) (IT)
(72) Inventor: DE SANTIS, Antonio, 10135 Torino (IT)
(74) Representative: Buzzi, Notaro & Antonielli d'Oulx S.p.A.
(86) International application number: PCT/IB2022/061132
(87) International publication number: WO 2023/089549

(56) References cited:
- DE-A1- 19 534 568
- GB-A- 2 382 058
- JP-A- 2006 069 480

## Description

### Field of the invention and prior art

The present invention relates to a supporting cross member of a motor-vehicle dashboard.

In the automotive sector, dashboard cross member assemblies are known comprising a supporting cross member configured to be fixed on suitable brackets of the motor-vehicle body by means of fastening members which engage respective seats provided on a wall of the supporting cross member. The supporting cross member has a load-bearing function and is designed to support the steering column, the climate control module and the dashboard on which there are generally various components, such as, for example, the steering wheel, on-board instruments, buttons, indicators, warning lights, etc. Document JP2006069480A discloses a dashboard cross member including an electronic control unit.

### Object and summary of the invention

The object of the invention is to use the structure of the supporting cross member of a motor-vehicle dashboard, to achieve further advantageous technical functions, in addition to the function of supporting the dashboard and the other components indicated above.

An additional object of the invention is to provide a cross member for a motor-vehicle dashboard, which can be produced simply and cheaply.

According to one or more embodiments, one or more of the above mentioned aims are achieved through a motor-vehicle dashboard cross member having the characteristics specifically set forth in the claims that follow.

In particular, the invention relates to a supporting cross member of a motor-vehicle dashboard, defining a hollow bearing element which has an axial cavity, characterized in that a battery pack is mounted within the cavity of the supporting cross member.

According to a preferred characteristic of the invention, the cross member comprises a containment body arranged to contain the battery pack, the containment body being mounted axially within the cavity of the cross member.

The embodiments also relate to a motor-vehicle dashboard comprising a supporting cross member having the characteristics indicated above.

The embodiments also relate to a method for assembling a supporting cross member of a motor-vehicle dashboard.

### Detailed description of more embodiments

Further characteristics and advantages of the invention will become apparent from the description that follows with reference to the attached drawings, provided purely by way of non-limiting example, wherein:
- Figure 1 is a schematic exploded perspective view of a motor-vehicle dashboard;
- Figure 2 is a schematic perspective view of a motor-vehicle dashboard cross member, according to a preferred embodiment of the invention;
- Figures 3A, 3B are exploded perspective views illustrating some assembly steps of the cross member illustrated in the previous figures,
- Figure 4A is a cross-sectional view along the line A-A of Figure 2,
- Figure 4B is an enlarged scale view of some components illustrated in the previous Figure,
- Figure 5 is an exploded perspective view of some components illustrated in Figure 4B.

In the following description various specific details are illustrated aimed at a thorough understanding of examples of one or more embodiments. The embodiments can be implemented without one or more of the specific details, or with other methods, components, materials, etc. In other cases, known structures, materials, or operations are not shown or described in detail to avoid obscuring various aspects of the embodiments. The reference to "an embodiment" in the context of this description indicates that a particular configuration, structure or characteristic described in relation to the embodiment is included in at least one embodiment. Therefore, phrases such as "in an embodiment", possibly present in different places of this description do not necessarily refer to the same embodiment. Moreover, particular conformations, structures or characteristics can be combined in a suitable manner in one or more embodiments and/or associated with the embodiments in a different way from that illustrated here, for example, a characteristic here exemplified in relation to a figure may be applied to one or more embodiments exemplified in a different figure.

The references illustrated here are only for convenience and do not therefore delimit the field of protection or the scope of the embodiments.

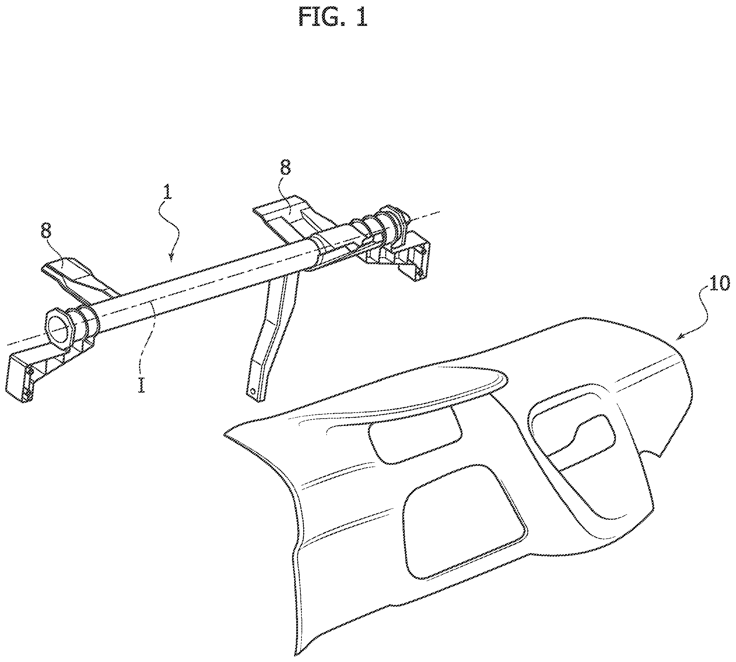

With reference to Figure 1, numeral 10 generally indicates a dashboard of a motor-vehicle comprising a supporting cross member 1 arranged to support the dashboard 10 and all the components associated therewith. As is known, the dashboard 10 is provided for arranging various components, such as for example finishing panels, complete acoustic insulation panels, the instrument panel, push-button panels, adjustment cursors, air vents, airbags, the radio/sat nav system, etc.

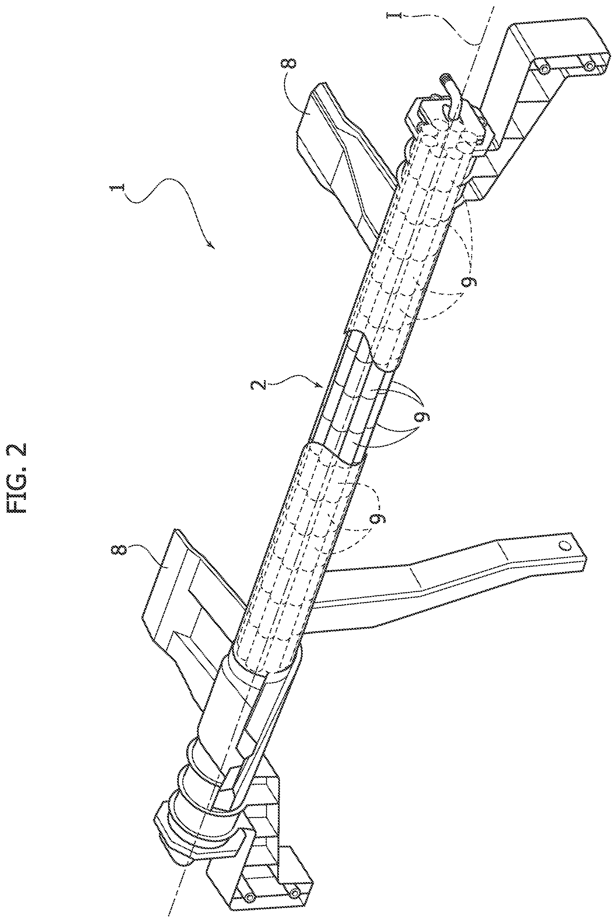

According to the perspective view of Figure 2, the supporting cross member 1 is a hollow element of elongated shape, for example with a circular cross-section, fixed to the body or to the chassis of the motor-vehicle transversely with respect to the longitudinal axis of the vehicle on which it is mounted. For example, as is known, the cross member 1 is able to extend from the right side to the left side of the motor-vehicle passenger compartment, along a main horizontal axis I.

In the embodiment illustrated in Figures 1,2, the cross member 1 comprises a tubular main body with a circular cross-section, with which a plurality of brackets 8 are associated, useful for fixing the cross member 1 to the vehicle body, or for mounting some components present in the passenger compartment on the cross member 1.

According to the present invention, a battery pack 2 is mounted inside the cavity 3 of the cross member 1. Purely by way of non-limiting example, the cavity 3 of the cross member 1 is used as a containment body for a pack of rechargeable batteries 2 comprising various battery cells/modules 9 for powering an electric or hybrid propulsion system of the motor vehicle (or other systems mounted on board the motor-vehicle).

The battery pack 2 inside the cross member 1 may be of different types, shapes and voltages - depending on the vehicle on which they are installed - such as, for example, a lithium ion rechargeable battery, nickelcadmium batteries, etc.

In a possible application of the invention, the battery pack 2 comprises several tens of battery cells/modules 9 arranged side-by-side, creating an additional weight of about 12 kg with respect to the structure of the supporting cross member 1. Also for this reason, the supporting cross member 1 is preferably made of a light and resistant material, such as for example a light aluminum alloy.

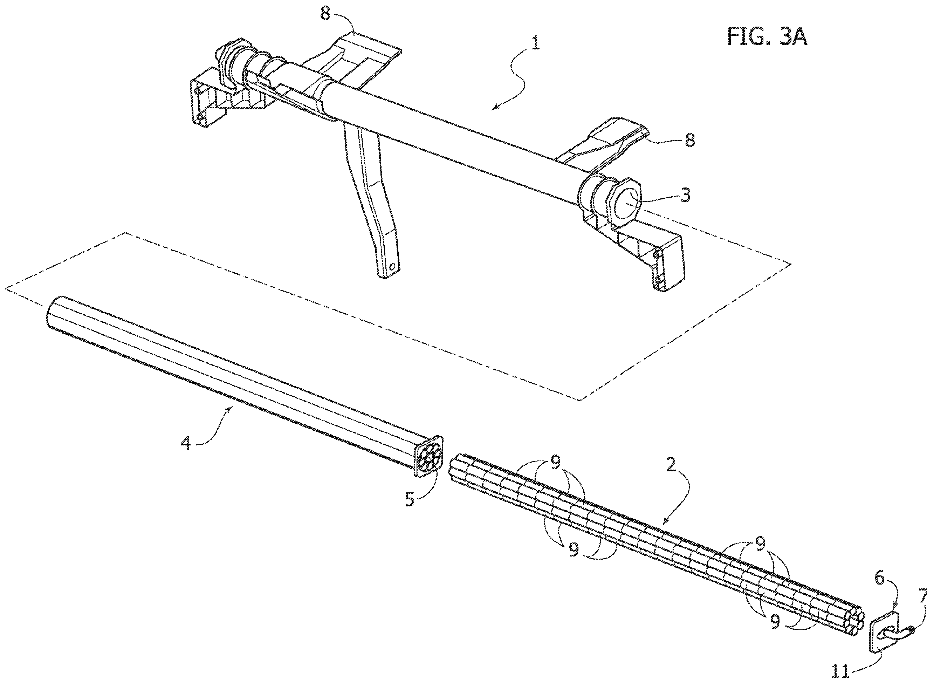

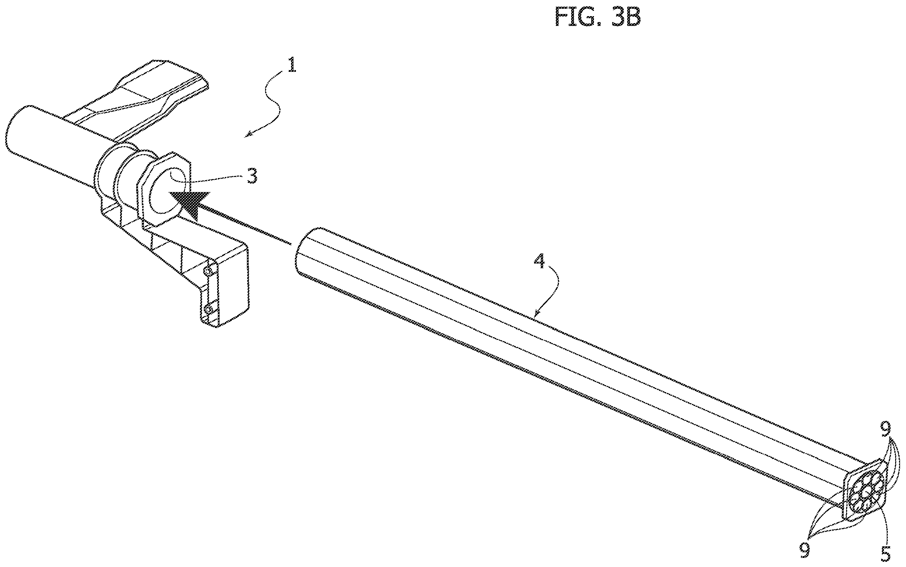

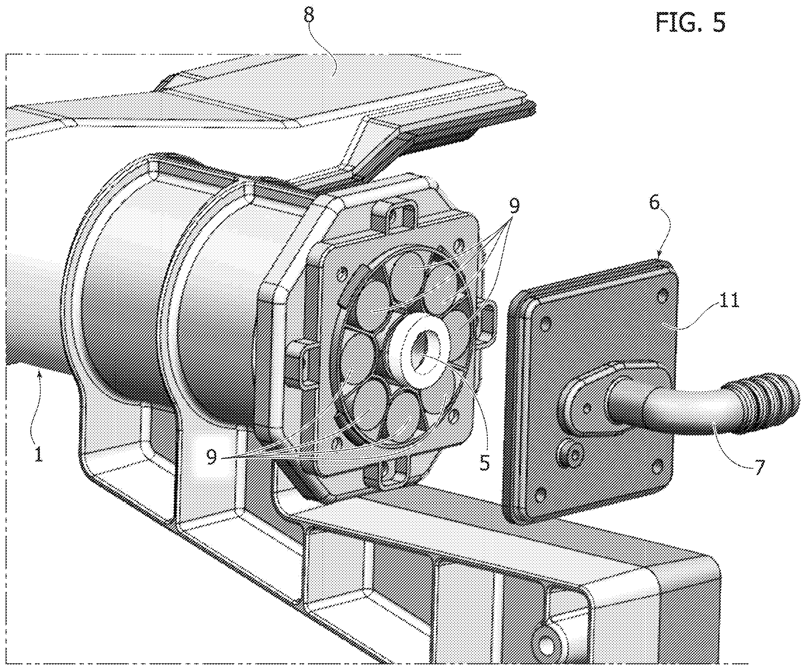

According to a preferred embodiment of the invention illustrated in Figures 3A-6, the cross member 1 comprises a containment body 4 inside it designed to contain the battery modules 9 inside it. The containment body 4 is made in such a way as to be easily housed inside the cavity 3 of the supporting cross member 1, with a "cartridge" type configuration containing the batteries 9.

In one or more embodiments, the cross member 1 has a tubular structure, within which an elongated cylindrically-shaped containment body 4 is arranged, so that the cross member 1 and the containment body 4 are coaxial. Of course, the shape of the containment body 4 varies according to the shape of the supporting cross member 1, to allow it to be housed inside it.

With reference to Figure 3a, the battery pack 2 is arranged inside a containment body 4, which is in turn inserted inside the cavity 3 of the supporting cross member 1 along an axial direction.

In accordance with this embodiment, it is envisaged that the insertion of the battery pack 2 inside the containment body 4 is only necessary during the assembly step of the motor-vehicle itself, after having charged the batteries 9, or in concurrence of scheduled maintenance operations. The arrangement of the containment element 4 of the rechargeable batteries embodies a "cartridge" type configuration containing the batteries 9.

In accordance with a further embodiment, the battery pack 2 is made in a shape suitable for being inserted axially within the cavity of the dashboard cross member, without the aid of a containment body interposed between the wall of the cross member 1 and the battery pack 2. In one or more embodiments, the battery pack 2 has a tubular structure suitable for insertion into the cavity 3 of the cross member 1.

According to an additional characteristic of the invention, the containment body 4 comprises a central axial channel 5 arranged to allow the passage of an air-flow to cool the battery pack 2 arranged inside the containment body 4, radially around the central axial channel 5. The air-flow that passes within the central axial channel 5 is generated by the climate control system of the vehicle, and is made to flow continuously through ducting elements associated with the cross member 1. More generally, the battery pack 2 is mounted within the cross member so as to receive a cooling flow passing through at least one opening.

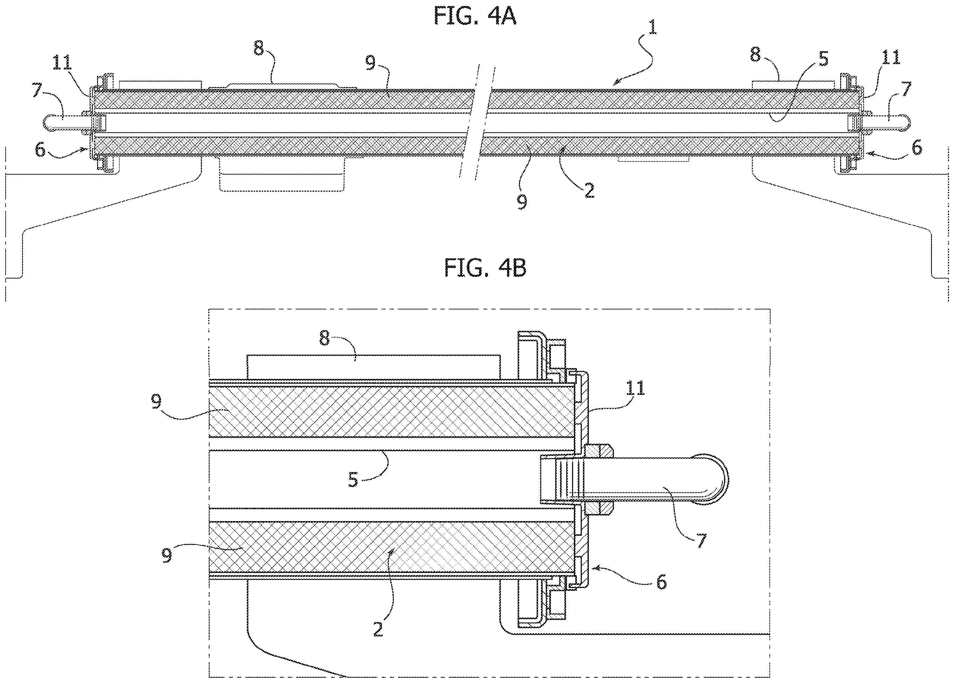

As illustrated in Figures 4B-5, at the ends of the cross member 1 there are respective closing elements 6 arranged to close the ends of the cross member 1 and to lock the battery pack 2 in position inside the containment body 4. The closing elements 6 comprise a main wall 11 substantially perpendicular to the axis I of the cross member 1, from which a connecting element 7 extends to achieve the connection with respective ducting elements of an air conditioning system, so as to allow a flow of air within the central axial channel 5.

It should be noted that in the final step of assembling the batteries 9 within the cross member 1, it is necessary to electrically connect the battery pack 2 to an electrical circuit/component of the motor-vehicle (for example, an electronic control unit) in order to be able to recharge the pack 2 batteries, so as to allow the operation of the power supply and recharge functions.

## Claims

1. A cross member (1) for supporting a dashboard (10) of a motor-vehicle defining a hollow bearing element having an axial cavity (3), **characterized in that** a battery pack (2) is mounted within said axial cavity (3) of the supporting cross member (1).

2. A cross member (1) according to claim 1, **characterized in that** it comprises a containment body (4) arranged to contain the battery pack (2), said containment body (4) being mounted inside the cavity (3) of the supporting cross member (1).

3. A cross member (1) according to claim 2, **characterized in that** the containment body (4) comprises an axial channel (5) provided for enabling passage of an air-flow for cooling the battery pack (2) arranged inside the containment body (4), said battery pack (2) being arranged radially around the axial channel (5).

4. A cross member (1) according to claim 1, **characterized in that** respective closing elements (6) are provided at the ends of the cross member (1), for closing the ends of the cross member (1) and locking in position the battery pack (2) inside the containment body (4).

5. A cross member (1) according to claim 4, **characterized in that** the closing elements (6) comprise at least one connecting element (7) for connecting with respective duct elements of a vehicle air conditioning system, so as to enable passage of an air-flow inside the cavity (3) to cool the battery pack (2).

6. A motor-vehicle dashboard (10) comprising a supporting cross member (1) according to any of the previous claims.

7. A motor-vehicle comprising a supporting cross member (1) for a dashboard (10) according to any of the claims 1-5

8. A method for assembling a cross member (1) of a motor-vehicle dashboard (10) according to claim 1, comprising the following steps:
- providing a battery pack (2) to power an electric or hybrid propulsion system,
- inserting the battery pack (2) inside the axial cavity (3) of the supporting cross member (1),
- electrically connecting the battery pack (2) to an electrical circuit of the motor-vehicle,
- assembling the dashboard (10) on the supporting cross member (1).

9. A method according to claim 8, comprising the steps of:
- providing a containment body (4) for containing the battery back (2),
- arranging the battery pack (2) inside the containment body (4).

## Patentansprüche

1. Querträger (1) zur Abstützung einer Instrumententafel (10) eines Kraftfahrzeugs, der ein hohles Lagerelement mit einem axialen Hohlraum (3) definiert, **dadurch gekennzeichnet, dass** ein Batteriepack (2) innerhalb des genannten axialen Hohlraums (3) des stützenden Querträgers (1) montiert ist.

2. Querträger (1) nach Anspruch 1, **dadurch gekennzeichnet, dass** er einen Aufnahmekörper (4) umfasst, der dazu eingerichtet ist, das Batteriepack (2) aufzunehmen, wobei der genannte Aufnahmekörper (4) innerhalb des Hohlraums (3) des stützenden Querträgers (1) montiert ist.

3. Querträger (1) nach Anspruch 2, **dadurch gekennzeichnet, dass** der Aufnahmekörper (4) einen axialen Kanal (5) umfasst, der dazu vorgesehen ist, den Durchtritt eines Luftstroms zur Kühlung des innerhalb des Aufnahmekörpers (4) angeordneten Batteriepacks (2) zu ermöglichen, wobei das genannte Batteriepack (2) radial um den axialen Kanal (5) herum angeordnet ist.

4. Querträger (1) nach Anspruch 1, **dadurch gekennzeichnet, dass** an den Enden des Querträgers (1) jeweilige Verschlusselemente (6) vorgesehen sind, um die Enden des Querträgers (1) zu verschließen und das Batteriepack (2) innerhalb des Aufnahmekörpers (4) in Position zu arretieren.

5. Querträger (1) nach Anspruch 4, **dadurch gekennzeichnet, dass** die Verschlusselemente (6) mindestens ein Verbindungselement (7) zur Verbindung mit jeweiligen Kanalelementen einer Fahrzeugklimaanlage umfassen, um so den Durchtritt eines Luftstroms innerhalb des Hohlraums (3) zur Kühlung des Batteriepacks (2) zu ermöglichen.

6. Kraftfahrzeug-Instrumententafel (10), umfassend einen stützenden Querträger (1) nach einem der vorhergehenden Ansprüche.

7. Kraftfahrzeug, umfassend einen stützenden Querträger (1) für eine Instrumententafel (10) nach einem der Ansprüche 1-5.

8. Verfahren zur Montage eines Querträgers (1) einer Kraftfahrzeug-Instrumententafel (10) nach Anspruch 1, umfassend die folgenden Schritte:
- Bereitstellen eines Batteriepacks (2) zur Stromversorgung eines elektrischen oder Hybrid-Antriebssystems,
- Einsetzen des Batteriepacks (2) in den axialen Hohlraum (3) des stützenden Querträgers (1),
- elektrisches Verbinden des Batteriepacks (2) mit einem elektrischen Stromkreis des Kraftfahrzeugs,
- Montieren der Instrumententafel (10) an dem stützenden Querträger (1).

9. Verfahren nach Anspruch 8, umfassend die Schritte:
- Bereitstellen eines Aufnahmekörpers (4) zur Aufnahme des Batteriepacks (2),
- Anordnen des Batteriepacks (2) innerhalb des Aufnahmekörpers (4).

## Revendications

1. Traverse (1) pour supporter une planche de bord (10) d'un véhicule automobile définissant un élément de support creux ayant une cavité axiale (3), **caractérisée en ce qu'**un bloc-batterie (2) est monté à l'intérieur de ladite cavité axiale (3) de la traverse de support (1).

2. Traverse (1) selon la revendication 1, **caractérisée en ce qu'**elle comprend un corps de confinement (4) agencé pour contenir le bloc-batterie (2), ledit corps de confinement (4) étant monté à l'intérieur de la cavité (3) de la traverse de support (1).

3. Traverse (1) selon la revendication 2, **caractérisée en ce que** le corps de confinement (4) comprend un canal axial (5) prévu pour permettre le passage d'un flux d'air pour le refroidissement du bloc-batterie (2) disposé à l'intérieur du corps de confinement (4), ledit bloc-batterie (2) étant disposé radialement autour du canal axial (5).

4. Traverse (1) selon la revendication 1, **caractérisée en ce que** des éléments de fermeture respectifs (6) sont prévus aux extrémités de la traverse (1), pour fermer les extrémités de la traverse (1) et verrouiller en position le bloc-batterie (2) à l'intérieur du corps de confinement (4).

5. Traverse (1) selon la revendication 4, **caractérisée en ce que** les éléments de fermeture (6) comprennent au moins un élément de raccordement (7) pour se raccorder à des éléments de conduit respectifs d'un système de climatisation de véhicule, de manière à permettre le passage d'un flux d'air à l'intérieur de la cavité (3) pour refroidir le bloc-batterie (2).

6. Planche de bord (10) de véhicule automobile comprenant une traverse de support (1) selon l'une quelconque des revendications précédentes.

7. Véhicule automobile comprenant une traverse de support (1) pour une planche de bord (10) selon l'une quelconque des revendications 1 à 5.

8. Procédé d'assemblage d'une traverse (1) d'une planche de bord (10) de véhicule automobile selon la revendication 1, comprenant les étapes suivantes :
- fournir un bloc-batterie (2) pour alimenter un système de propulsion électrique ou hybride,
- insérer le bloc-batterie (2) à l'intérieur de la cavité axiale (3) de la traverse de support (1),
- connecter électriquement le bloc-batterie (2) à un circuit électrique du véhicule automobile,
- assembler la planche de bord (10) sur la traverse de support (1).

9. Procédé selon la revendication 8, comprenant les étapes de :
- fournir un corps de confinement (4) pour contenir le bloc-batterie (2),
- disposer le bloc-batterie (2) à l'intérieur du corps de confinement (4).
